# EUROPÄISCHE PATENTSCHRIFT

(11) **EP 1 697 657 B1**
(45) Veröffentlichungstag und Bekanntmachung des Hinweises auf die Patenterteilung: **02.04.2014**
(21) Anmeldenummer: 04820575.1
(22) Anmeldetag: 02.12.2004
(51) Int. Cl.: F16H 15/42

(54) **STUFENLOS EINSTELLBARES GETRIEBE**
CONTINUOUSLY VARIABLE TRANSMISSION
TRANSMISSION A VARIATION CONTINUE

(30) Priorität: 23.12.2003 DE 10361542; 30.03.2004 CN 200410031846; 16.07.2004 BR 0402959
(43) Veröffentlichungstag der Anmeldung: 06.09.2006
(73) Patentinhaber: Rohs, Ulrich,, 52351 Düren (DE)
(72) Erfinder: ROHS, Ulrich, 52351 Düren (DE); DRÄGER, Christoph, 52459 Inden (DE); BARTLING, Tim, 52062 Aachen (DE); BRANDWITTE, Werner, 52379 Langerwehe (DE)
(74) Vertreter: Reuther, Martin
(86) Internationale Anmeldenummer: PCT/DE2004/002647
(87) Internationale Veröffentlichungsnummer: WO 2005/061928

(56) Entgegenhaltungen:
- EP-A- 0 003 887
- EP-A- 0 878 641
- US-A- 4 322 798
- US-A- 5 924 953

## Beschreibung

Die Erfindung betrifft ein stufenlos einstellbares Getriebe mit wenigstens zwei Getriebegliedern und wenigstens einem Verbindungsglied, welches die Getriebeglieder miteinander wirkverbindet und in seiner Position stufenlos gegenüber den Getriebegliedern verlagerbar angeordnet ist nach dem Oberbegriff des Anspruchs 1.

Es gibt bereits eine Vielzahl an stufenlos einstellbaren Getrieben, bei welchen die Position eines Verbindungsgliedes, welches zwei Getriebeglieder miteinander verbindet, gegenüber diesen Getriebegliedern stufenlos einstellbar ist. Beispielsweise ist ein Kegelreibringgetriebe aus der GB-PS 298 676 bekannt. Bei der dort beschriebenen Ausführung ist parallel zu den Achsen der Kegelreibräder auf einer Führungsachse ein Führungsglied geführt, welches den Reibring entlang den Kegelreibrädern führt. Hierdurch ist eine stufenlose Verstellung des Übersetzungsverhältnisses des Kegelreibringgetriebes realisiert. Für die Verstellung des Reibringes ist jedoch ein besonderer Antrieb erforderlich, der das Getriebe baulich sehr aufwändig gestaltet.

Dokument EP-A-0 878 641 offenbart die Merkmale des Oberbegriffs des Anspruchs 1.

Es ist die Aufgabe vorliegender Erfindung, die Steuerung des Reibringes dahingehend zu verbessern, dass ein stufenlos einstellbares Getriebe möglichst klein gehalten wird, so dass es insbesondere auch als Fahrzeuggetriebe vorteilhaft eingesetzt werden kann. Die Aufgabe der Erfindung wird von einem stufenlos einstellbaren Getriebe mit den Merkmalen des Anspruchs 1 gelöst.

Insbesondere kann das stufenlos einstellbare Getriebe mit wenigstens zwei Getriebegliedern und wenigstens einem Verbindungsglied vorgesehen sein, welches die Getriebeglieder miteinander wirkverbindet und in seiner Position stufenlos gegenüber den Getriebegliedern verlagerbar angeordnet ist, bei welchem das Verbindungsglied in einer Führungseinrichtung angeordnet ist, welche um eine Drehachse schwenkbar gelagert ist, deren Achsenrichtung eine Komponente umfasst, welche parallel zu einer durch die beiden Achsen der Getriebeglieder aufgespannte Ebene angeordnete ist. Dieses bedeutet im Ergebnis, dass die Drehachse parallel zu oder in dieser Ebene angeordnet ist oder dass die Drehachse diese Ebene in einem spitzen Winkel schneidet. Vorteilhafterweise verlagert sich das Verbindungsglied, beispielsweise mittels einer verlagerbaren Halterung, gegenüber den Getriebegliedern translatorisch, wenn die Führungseinrichtung um die Drehachse geschwenkt wird. Je nachdem in welche Richtung die Führungseinrichtung um die Drehachse gedreht wird, verlagert sich das Verbindungsglied translatorisch in eine erste Richtung oder in eine zweite Richtung, die der ersten Richtung entgegengesetzt ist.

Insbesondere kann vorzugsweise die Translationsbewegung hierbei einzig aus der Rotation der beiden Getriebeglieder bedingt sein, so dass lediglich für die Schwenkbewegung um die Drehachse separat Kräfte aufgebracht werden müssen, während die für die Verlagerung bzw. Translationsbewegung an sich benötigten Kräfte durch den Getriebestrang selbst bzw. durch die Rotation der beiden Getriebeglieder und des Verbindungsgliedes bereitgestellt werden.

Unter dem Begriff "Führungseinrichtung" versteht man vorliegend ein Gebilde, in welchem das Verbindungsglied rotatorisch gelagert ist. Auch ist das Verbindungsglied mittels der Führungseinrichtung gegenüber den Getriebegliedern auch translatorisch verlagerbar.

Dadurch, dass die translatorische Bewegung des Verbindungsgliedes im Wesentlichen durch eine rotatorische Bewegung der Führungseinrichtung bewirkt wird, ist es möglich, die Position des Verbindungsgliedes gegenüber den Getriebegliedern baulich besonders einfach stufenlos zu verlagern. Somit ist das vorliegende stufenlos einstellbare Getriebe besonders klein konstruiert.

Um die Position eines solchen Verbindungsgliedes zuverlässiger sowie störungsfreier zu erfassen, fasst das stufenlos einstellbare Getriebe eine mechanische Positionserfassung auf, die ein mechanisches Positionssignal durch eine Trennwand, nämlich ein Gehäuse- bzw. Fluidraumwand, übermittelt.

Besonders vorteilhaft ist es hierbei, dass die mechanische Positionserfassung bzw. das mechanische Positionssignal auch bei baulich schwierigen Betriebsbedingungen exakte Daten ermitteln und weiterleiten kann. Beispielsweise ist es aufgrund des Vorsehens des mechanischen Positionssignals möglich, auf elektronische Bauteile und/oder optische Bauteile unmittelbar im Bereich der Getriebeglieder bzw. des Verbindungsglieds zu verzichten. Insbesondere kann erfindungsgemäß auf elektronische bzw. optische Bauteile in der unmittelbaren Nähe der Getriebeglieder verzichtet werden, sodass dort vorherrschende hohe Temperaturen sowie die Anwesenheit eines Traktionsfluids die hier beschriebene Positionserfassung nicht nachteilig beeinflussen. Somit ist die Positionsermittelung sehr störunanfällig konstruiert, sodass eine besonders betriebssichere und zuverlässige Positionsermittlung gewährleistet ist.

Die Aufgabe der Erfindung wird darüber hinaus von einem stufenlos einstellbaren Getriebe mit wenigstens zwei Getriebegliedern und wenigstens einem Verbindungsglied, welches die Getriebeglieder miteinander wirkverbindet und in seiner Position stufenlos gegenüber den Getriebegliedern verlagerbar angeordnet ist, gelöst, bei welchem das stufenlos einstellbare Getriebe eine Positionserfassung aufweist, mit welcher die relative Position des Verbindungsgliedes gegenüber wenigstens einem Getriebeglied bei einem Getriebestillstand ermittelbar ist. Durch eine derartige Positionserfassung stehen Informationen über die Position des Verbindungsgliedes selbst bei einem Getriebestillstand bzw. bei einem Motorstillstand jederzeit zur Verfügung. Hierdurch ist die Bestimmung der Position des Verbindungsgliedes vorteilhafter Weise unabhängig von dem Betriebszustand des jeweiligen stufenlos einstellbaren Getriebes möglich. Darüber hinaus ist es möglich, die Position eines Verbindungsgliedes gegenüber wenigstens einem Getriebeglied auch bei einem auftretenden Schlupf zwischen den einzelnen Gliedern besonders exakt zu bestimmen, da die vorliegende mechanische Positionserfassung bzw. das vorliegende mechanische Positionssignal unabhängig von einer Drehzahlermittelung die Position erfassen und übertragen können.

Die vorliegende Erfindung eignet sich besonders für einen Einsatz an einem an sich bekannten Kegelringgetriebe, bei welchem ein Drehmoment beispielsweise von einem Eingangskegel über einen rotierenden Reibring auf einen Ausgangskegel übertragen wird, oder umgekehrt.

Der Begriff "mechanisches Positionssignal" beschreibt im Sinne der Erfindung jegliche Bauteile, die dazu geeignet sind, die Position des Verbindungsgliedes auf mechanischem Wege von einem ersten Bereich zu einem zweiten Bereich zu übermitteln. Hierbei ist mit dem Begriff "erster Bereich" vorzugsweise derjenige Bereich des stufenlos einstellbaren Getriebes gemeint, in welchem unmittelbar die Getriebeglieder bzw. das Verbindungsglied angeordnet sind. Der Begriff "zweiter Bereich" umfasst im Sinne der Erfindung entweder einen Bereich des stufenlosen Getriebes, der von dem ersten Bereich verschieden ist oder einen Bereich, der komplett außerhalb des stufenlos einstellbaren Getriebes angeordnet ist. In jedem Fall unterscheiden sich der erste und der zweite Bereich im Wesentlichen durch die jeweils vorherrschenden thermischen Bedingungen, die insbesondere während des Betriebs des stufenlos einstellbaren Getriebes in den jeweiligen ersten oder zweiten Bereich sehr unterschiedlich sind.

Eine Ausführungsvariante sieht vor, dass das mechanische Positionssignal mit Datenerfassungs- und/oder Datenverarbeitungsmitteln verbunden ist. Hierdurch ist sichergestellt, dass die Informationen, die das mechanische Positionssignal je nach Reibringstellung bereitstellt, sicher und effektiv erfasst und auch verarbeitet wird. Es hat sich gezeigt, dass derartige Datenerfassungs- und/oder Datenverarbeitungsmittel durch standardisierte Optik- und/oder Elektronikbauteile wirtschaftlich besonders günstig realisiert werden können.

Eine Ausführungsvariante sieht vor, dass die Trennwand eine Gehäusewand des stufenlos einstellbaren Getriebes ist. Hierdurch ist es möglich Getriebedaten besonders betriebssicher an Datenerfassungs-und/oder Datenverarbeitungsmittel zu führen.

In diesem Zusammenhang ist es besonders vorteilhaft, wenn die Trennwand eine Fluidraumwand des stufenlos einstellbaren Getriebes ist. Hierdurch ist gewährleistet, dass das mechanische Positionssignal beispielsweise in einem Traktionsfluid befüllten Fluidraum betriebssicher ermittelt und aus diesem Fluidraum betriebssicher übermittelt werden kann.

Durch ein Führen des mechanischen Positionssignals durch derartige Trennwände ist es möglich, Datenerfassung- und/oder Datenverarbeitungsmittel weit genug von dem Hochtemperaturbereichen des stufenlos einstellbaren Getriebes anzuordnen, sodass als Datenerfassungs- und/oder Datenverarbeitungsmittel Standardoptikbauteile bzw. Standardelektronikbauteile verwendet werden können.

Besonders vorteilhaft ist es, dass das Anordnen eines mechanischen Positionssignals durch eine Trennwand, sei es durch eine Fluidraumwand oder durch eine Gehäusewand des stufenlos einstellbaren Getriebes baulich besonders einfach realisierbar ist, da das Durchführen eines mechanischen Positionssignals durch derartige Wandungen vom Stand der Technik bereits gut beherrschbar ist. Insbesondere hinsichtlich der Dichtungsproblematik stellt ein derartiges mechanisches Positionssignal nur mäßig hohe Anforderungen an konstruktive Lösungen im Zusammenhang mit einem stufenlos einstellbaren Getriebe.

Ein besonders bevorzugtes Ausführungsbeispiel sieht vor, dass ein translatorisches Positionssignal in ein rotatorisches Positionssignal umgewandelt wird. Hierdurch kann das mechanische Positionssignal besonders platzsparend in ein stufenlos einstellbares Getriebe integriert werden. Da derartige Umwandlungsmechaniken aus dem Stand der Technik hinlänglich bekannt sind, ist eine Mechanik eines derartigen mechanischen Positionssignals besonders zuverlässig übermittelbar.

In diesem Zusammenhang hat es sich als besonders vorteilhaft herausgestellt, wenn das stufenlos verlagerbare Verbindungsglied eine Führungseinrichtung aufweist, welche an einer Drehachse gelagert ist und die Drehachse ein rotatorisches Positionssignal aufweist. Hierdurch baut das stufenlos einstellbare Getriebe mit der vorliegenden mechanischen Positionserfassung bzw. dem mechanischen Positionssignal besonders platzsparend, da als mechanisches Positionssignal die Drehachse einer ohnehin vorgesehenen Führungseinrichtung eines stufenlos verlagerbaren Verbindungsgliedes, wie beispielsweise die Führungseinrichtung eines Reibringes, genutzt wird. Insbesondere können hierdurch Dichtungsaufgaben besonders einfach gelöst werden, da das Abdichten einer rotatorisch bewegten Drehachse, die eine Trennwand durchstößt, relativ einfach und kostengünstig erzielt werden kann.

Weitere Vorteile, Ziele und Eigenschaften vorliegender Erfindung werden anhand nachfolgender Beschreibung anliegender Zeichnung erläutert, in welcher beispielhaft ein mechanisches Positionssignal im Zusammenhang mit einer teilweise dargestellten Führungseinrichtung dargestellt ist.

Es zeigt
- Figur 1: schematisch eine Teilansicht einer Führungseinrichtung,
- Figur 2: schematisch eine Draufsicht auf die Führungseinrichtung aus der Figur 1,
- Figur 3: schematisch eine Seitenansicht der Führungseinrichtung aus den Figuren 1 und 2,
- Figur 4: eine perspektivische Draufsicht auf die Führungseinrichtung der vorgenannten Figuren,
- Figur 5: schematisch eine Ansicht von unten auf die Führungseinrichtung der vorgenannten Figuren,
- Figur 6: schematisch eine Teilansicht eines mechanischen Positionierstabs,
- Figur 7: schematisch eine alternative Führungseinrichtung mit einem daran angeordneten Positionierstab,
- Figur 8: schematisch einen Querschnitt durch ein Kegelreibringgetriebe aus der Figur 9 entlang der Linie I - I,
- Figur 9: schematisch eine Draufsicht auf das Kegelreibringgetriebe aus der Figur 8 und
- Figur 10: schematisch einen Längsschnitt durch ein Kegelreibringgetriebe an einem Fahrzeugantrieb für einen Frontantrieb.

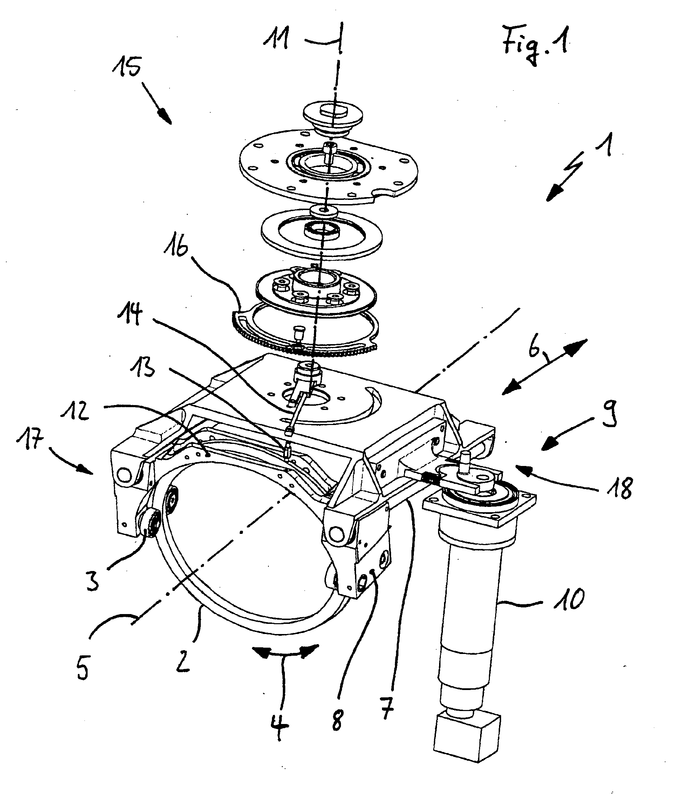

Die in der Figur 1 gezeigte Führungseinrichtung 1 führt einen Reibring 2. Der Reibring 2 ist mittels Führungsrollen 3 (hier nur exemplarisch beziffert) in Richtungen des Doppelpfeils 4 rotatorisch um die Achse 5 gelagert. Damit der Reibring 2 zusätzlich zu seiner Rotationsbewegung in Richtungen des Doppelpfeils 4 auch eine Translationsbewegung gemäß der Richtungen des Doppelpfeils 6 ausführen kann, weist die Führungseinrichtung 1 zwei Führungsachsen 7 (hier nur exemplarisch beziffert) auf, an welchen ein Führungsschlitten 8 translatorisch in die Richtungen des Doppelpfeils 6 verfahrbar ist.

Die Führungseinrichtung 1 ist in ihrem seitlichen Bereich 9 mit einer Einstellwelle 10 wirkverbunden, wodurch die gesamte Führungseinrichtung um eine Drehachse 11 drehbar ist. Je nach dem, wie die Führungseinrichtung 1 von der Einstellwelle 10 um die Drehachse 11 angestellt wird, verfährt der Führungsschlitten 8 mit dem darin angeordneten Reibring 2 entlang der Achse 5 in eine der beiden Richtungen des Doppelpfeiles 6.

Der Führungsschlitten 8 weist im Bereich seiner Verbindungsbrücke 12 (hier nur exemplarisch beziffert) einen Connector 13 auf, über welchen der Führungsschlitten 8 mit einem mechanischen Positionierstab 14 wirkverbunden ist. Der mechanische Positionierstab 14 ist in diesem Ausführungsbeispiel ein Bauteil einer Drehlageranordung 15, die um die Drehachse 11 drehbar an der Führungseinrichtung 1 angeordnet ist. Die Drehlageranordnung 15 umfasst neben dem Positionierstab 14 und weiteren hier nicht explizit erläuterten Bauteilgruppen zusätzlich einen Positionierzahnkranz 16.

Durch die hier gezeigte Führungseinrichtung 1, insbesondere durch den Positionierstab 14 und der Drehlageranordnung 15 mit dem Positionierzahnkranz 16, ist es möglich, dass die Position des Reibringes 2 im Bereich der Führungseinrichtung 1 auf mechanischem Wege exakt an eine Datenerfassungs- und/oder Verarbeitungseinheit (hier nicht dargestellt) übermittelt werden kann. Mittels des Positionierstabes 14 wird darüber hinaus eine lineare Bewegung des Reibringes 2 entlang der Achse 5 und damit auch eine Positionsänderung des Reibringes 2 in ein rotatorisches Positionssignal umgewandelt, welches in dem vorliegenden Ausführungsbeispiel durch den Positionierzahnkranz 16 verkörpert ist. Der Reibring 2 ist nach dem Ausführungsbeispiel der Figur 1 gegenüber der Führungseinrichtung 1 in der vorderen Position 17 positioniert. Eine zu der vorderen Position 17 verschiedene Position des Reibringes 2 ist exemplarisch anhand einer hinteren Position 18, in welche der Führungsschlitten 8 und damit auch der Reibring 2 verlagert werden kann, angedeutet.

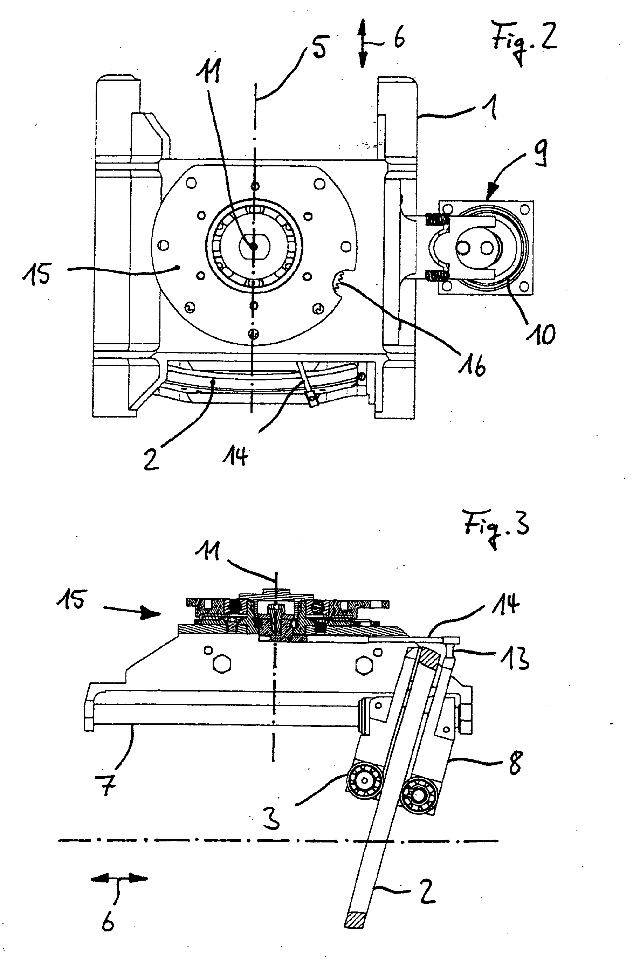

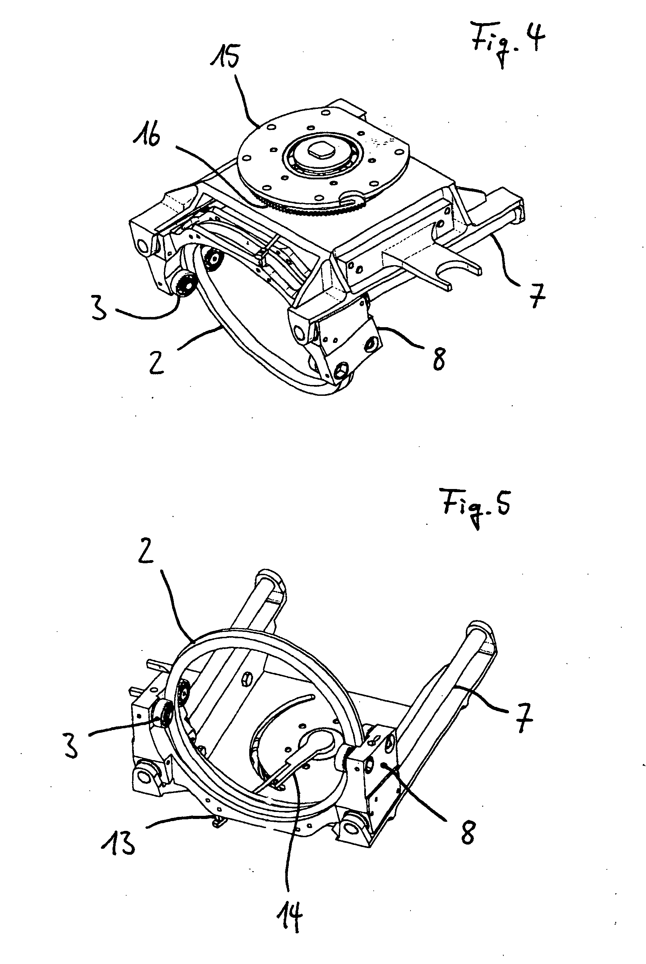

Die Führungseinrichtung 1 ist in den Figuren 2 bis 6 aus unterschiedlichen Perspektiven und Schnitten gezeigt.

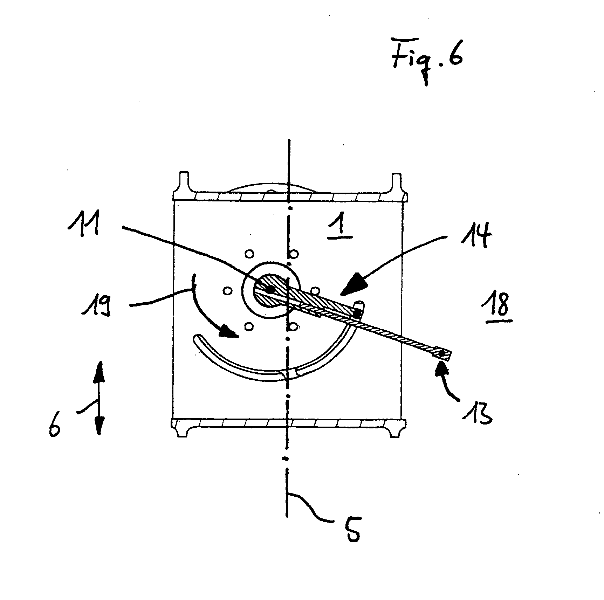

Nach der Figur 6 ist der Positionierstab 14 in einer hinteren Position 18 dargestellt, wobei der Führungsschlitten 8 entlang der Achse 5 in die hintere Position 18 verfahren ist. Somit hat der Positionierstab 14 um die Drehachse 11 gemäß der Pfeilrichtung 19 eine Drehbewegung ausgeführt, da der Positionierstab 14 über den Connector 13 mit dem Führungsschlitten 18 verbunden ist. Demnach ist eine translatorische Bewegung gemäß des Doppelpfeils 6 in eine rotatorische Bewegung gemäß der Drehrichtung 19 umgewandelt worden.

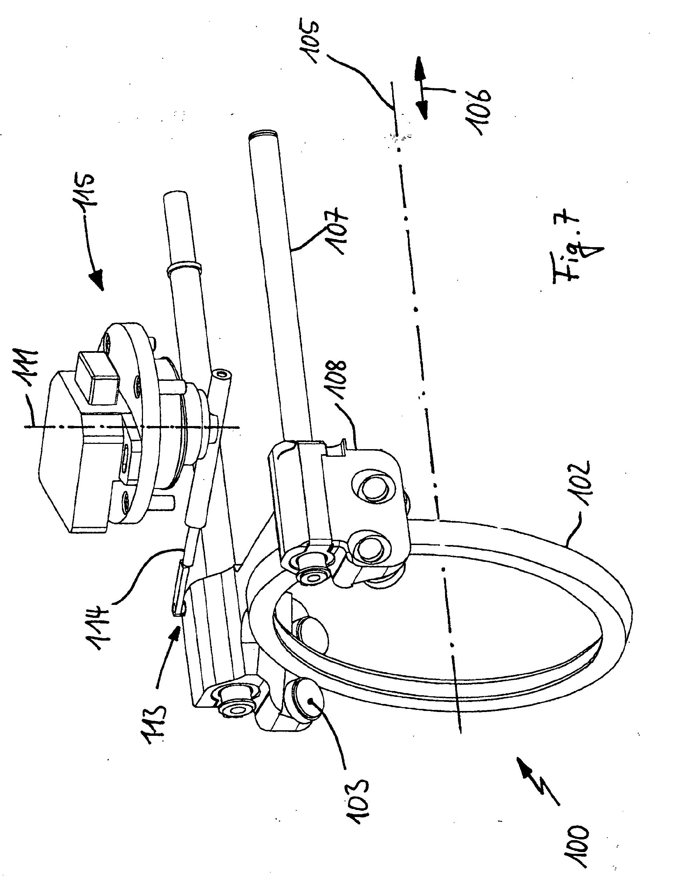

Das Ausführungsbeispiel 100 nach Figur 7 zeigt im Wesentlichen eine Drehlagerpositionieranordnung 115, die mit einem Führungsschlitten 108 über einen Positionierstab 114 und einem Connector 113 wirkverbunden ist. Hierbei verfährt der Führungsschlitten 108 entlang der Achse 105 an den Führungsachsen 107 (hier ebenfalls nur exemplarisch beziffert), währenddessen bei einer derartigen translatorischen Bewegung in einer der Richtungen des Doppelpfeiles 106 die Drehlagerpositionieranordnung 115 eine Rotation um die Drehachse 111 ausführt.

Entsprechend dem Ausführungsbeispiel nach den Figuren 1 bis 6 weist in diesem Ausführungsbeispiel 100 der Führungsschlitten 108 ebenfalls Führungsrollen 103 (hier nur exemplarisch beziffert) auf, die den Reibring 102 führen, sodass der Reibring 102 zum einen translatorisch entlang der Achse 105 bewegt werden und zum anderen eine Rotationsbewegung um die Achse 105 ausführen kann.

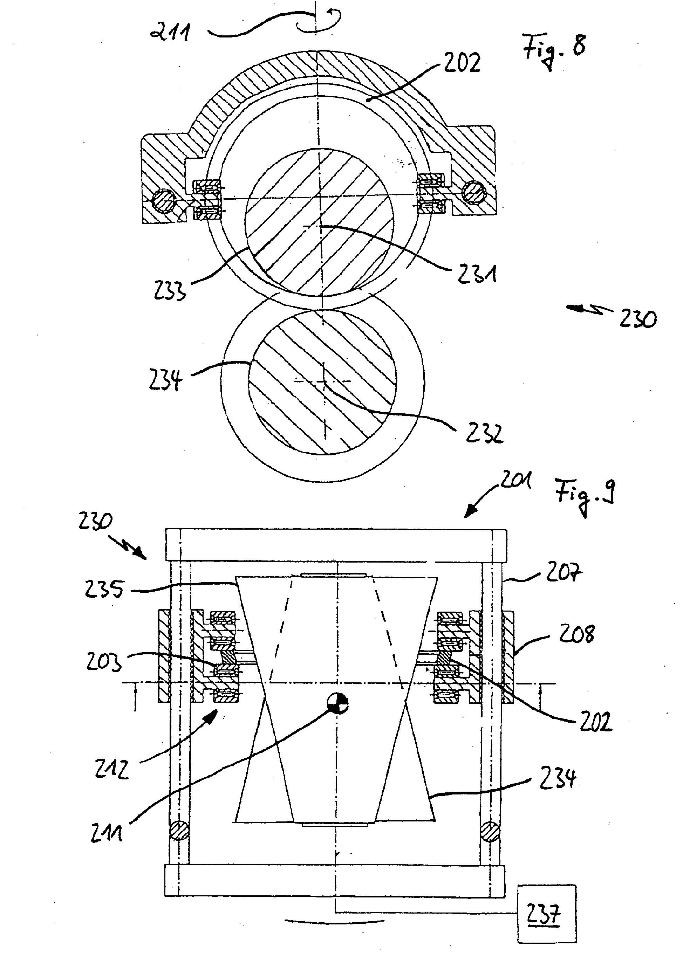

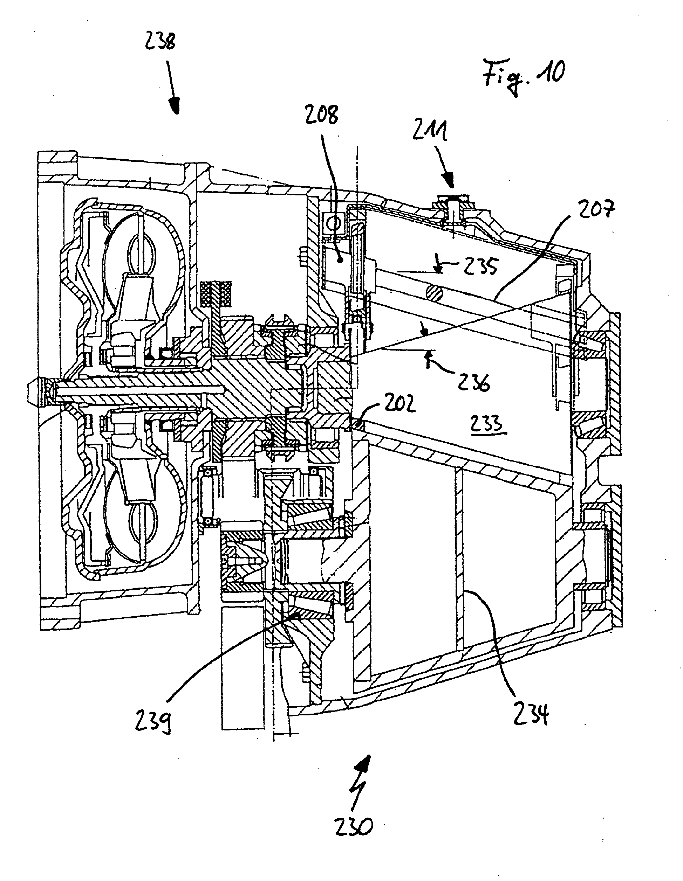

Das in den Figuren 8 bis 10 gezeigte Kegelreibringgetriebe 230 besteht im Wesentlichen aus zwei auf parallelen Achsen 231 und 232 mit einem radialen Abstand angeordneten Kegelreibrädern 233 und 234, die zueinander gegensinnig angeordnet sind und gleiche Kegelwinkel 235 bzw. 236 (siehe Figur 10) aufweisen. Zwischen den Kegelreibrädern 233 und 234 ist ein Reibring 202 angeordnet, der das Kegelreibrad 233 umgibt und in einem Führungsschlitten 208 gehalten ist. Der Führungsschlitten 208 besteht in diesem Ausführungsbeispiel aus einem Rahmen, der von zwei Verbindungsbrücken 212 (hier nur exemplarisch beziffert) gebildet ist. Der Führungsschlitten 208 ist an den Führungsachsen 207 gelagert. Die Führungsachsen 207 sind parallel zu den Achsen 231 und 232. Der Führungsschlitten 208 weist Führungsrollen 203 auf und diese greifen beiderseits des Reibringes 202 an und geben diesem die notwendige axiale Führung.

Die Führungseinrichtung 201 des Kegelreibringgetriebes 230 ist um die Drehachse 211 mittels eines Verstellmotors 237 drehbar gelagert. Wird die Führungseinrichtung 201 um wenige Winkelgrade um die Drehachse 211 verschwenkt, so bewirkt der Antrieb eine axiale Verstellung des Führungsschlittens 208 und damit eine Änderung des Übersetzungsverhältnisses der Kegelreibräder 233 und 234. Hierzu genügt ein geringer Energieaufwand.

Das in der Figur 10 gezeigte Kegelreibringgetriebe 230 ist mit einem Fahrzeugantrieb für einen Frontantrieb 238 versehen, auf dessen Funktionsweise vorliegend nicht weiter eingegangen wird. Die Kegelreibräder 233 und 234 sind mittels geeigneter Wälzlagerungen 239 (hier nur beispielhaft beziffert) sowohl axial als auch radial gelagert.

## Patentansprüche

1. Stufenlos einstellbares Getriebe mit wenigstens zwei Getriebegliedern (233, 234) und wenigstens einem Verbindungsglied (2, 102, 202), welches die Getriebeglieder (233, 234) miteinander wirkverbindet und in seiner Position stufenlos gegenüber den Getriebegliedern (233, 234) verlagerbar angeordnet ist, wobei das Verbindungsglied (2, 102, 202) in einer Führungseinrichtung (1) angeordnet ist, welche um eine Drehachse (11, 111, 211) schwenkbar gelagert ist, deren Achsenrichtung eine Komponente umfasst, welche parallel zu einer durch die beiden Achsen (231, 232) der Getriebeglieder (233, 234) aufgespannten Ebene angeordnet ist, **gekennzeichnet durch** eine mechanische Positionserfassung zur Erfassung der Position des Verbindungsglieds (2, 102, 202) gegenüber wenigstens einem Getriebeglied (233, 234), die ein mechanisches Positionssignal **durch** eine Gehäuse- bzw. Fluidraumwand des stufenlos einstellbaren Getriebes übermittelt.

2. Stufenlos einstellbares Getriebe nach Anspruch 1, **dadurch gekennzeichnet, dass** die Führungseinrichtung (1) eine verlagerbare Halterung (8, 108) für das Verbindungsglied (2, 102, 202) umfasst.

3. Stufenlos einstellbares Getriebe nach Anspruch 1 oder 2, **dadurch gekennzeichnet, dass** für die Verlagerung und/oder eine Translationsbewegung des Verbindungsglieds (2, 102, 202) an sich benötigten Kräfte durch die Rotation der beiden Getriebeglieder (233, 234) und des Verbindungsgliedes (2, 102, 202) bereitgestellt werden.

4. Stufenlos einstellbares Getriebe nach einem der vorstehenden Ansprüche, **dadurch gekennzeichnet, dass** mit der Positionserfassung die relative Position des Verbindungsgliedes (2, 102, 202) gegenüber wenigstens einem Getriebeglied (233, 234) bei einem Getriebestillstand ermittelbar ist.

5. Stufenlos einstellbares Getriebe nach einem der Ansprüche 1 bis 4, **dadurch gekennzeichnet, dass** das mechanische Positionssignal mit Datenerfassung-und/oder Datenverarbeitungsmitteln verbunden ist.

6. Stufenlos einstellbares Getriebe nach einem der Ansprüche 1 bis 5, **dadurch gekennzeichnet, dass** ein translatorisches Positionssignal in ein rotatorisches Positionssignal als das mechanische Positionssignal umgewandelt wird.

7. Stufenlos einstellbares Getriebe nach einem der Ansprüche 1 bis 6, **dadurch gekennzeichnet, dass** die Führungseinrichtung (1) um eine Drehachse (11; 105; 211) durch eine Drehlageranordnung (15; 115) gelagert ist, wobei die Drehlageranordnung (15; 115) einen Positionierstab (14; 114) aufweist, welcher ein rotatorisches Positionssignal als das mechanische Positionssignal erzeugt.

## Claims

1. A continuously variable gearbox with at least two gearbox components (233, 234) and at least one connecting component (2, 102, 202), which operatively connects the gearbox components (233, 234) to one another and is arranged in terms of the position thereof such that it can be displaced infinitely variably with respect to the gearbox components (233, 234), wherein the connecting component (2, 102, 202) is arranged in a guide apparatus (1), which is mounted pivotally about a rotational axis (11, 111, 211), the axial direction of which comprises a component, which is arranged parallel to a plane spanned by the two axes (231, 232) of the gear components (233, 234), **characterised by** a mechanical position detection for detecting the position of the connecting component (2, 102, 202) with respect to at least one gearbox component (233, 234), which transmits a mechanical position signal through a housing or fluid chamber wall of the infinitely variable gearbox.

2. The infinitely variable gearbox according to Claim 1, **characterised in that** the guide apparatus (1) comprises a displaceable holder (8, 108) for the connecting component (2, 102, 202).

3. The infinitely variable gearbox according to Claim 1 or 2, **characterised in that** forces which are required per se for the displacement and/or a translational movement of the connecting component (2, 102, 202) are provided by the rotation of the two gearbox components (233, 234) and the connecting component (2, 102, 202).

4. The infinitely variable gearbox according to one of the preceding claims, **characterised in that** the relative position of the connecting component (2, 102, 202) with respect to at least one gearbox component (233, 234) can be determined in the event of a gearbox standstill using the position detection.

5. The infinitely variable gearbox according to one of Claims 1 to 4, **characterised in that** the mechanical position signal is connected to data-collection and/or data-processing means.

6. The infinitely variable gearbox according to one of Claims 1 to 5, **characterised in that** a translational position signal is converted into a rotational positional signal as the mechanical position signal.

7. The infinitely variable gearbox according to one of Claims 1 to 6, **characterised in that** the guide apparatus (1) is mounted about a rotational axis (11; 105; 211) by means of a pivot bearing arrangement (15; 115), wherein the pivot bearing arrangement (15; 115) has a positioning rod (14; 114), which creates a rotational position signal as the mechanical position signal.

## Revendications

1. Transmission réglable en continu comportant au moins deux organes de transmission (233, 234) et au moins un organe de liaison (2, 102, 202), qui relie opérationnellement les organes de transmission (233, 234) l'un à l'autre et est disposé de manière déplaçable dans sa position en continu par rapport aux organes de transmission (233, 234), dans laquelle l'organe de liaison (2, 102, 202) est disposé dans un dispositif de guidage (1), qui est positionné de manière pivotante autour d'un axe de rotation (11, 111, 211), dont la direction d'axe comprend un composant, qui est disposé parallèlement à un plan se dressant à travers les deux axes (231, 232) des organes de transmission (233, 234), **caractérisé par** une détection de position mécanique pour détecter la position de l'organe de liaison (2, 102, 202) par rapport à au moins un organe de transmission (233, 234), qui transmet un signal de position mécanique à travers une paroi de logement ou de chambre de fluide de la transmission réglable en continu.

2. Transmission réglable en continu selon la revendication 1, **caractérisée en ce que** le dispositif de guidage (1) comprend un support déplaçable (8, 108) pour l'organe de liaison (2, 102, 202).

3. Transmission réglable en continu selon les revendications 1 ou 2, **caractérisée en ce que** les forces nécessaires en vue du déplacement et/ou d'un mouvement de translation de l'organe de liaison (2, 102, 202) sont fournies par la rotation des deux organes de transmission (233, 234) et de l'organe de liaison (2, 102, 202).

4. Transmission réglable en continu selon une des revendications précédentes, **caractérisée en ce qu'**avec la détection de position, la position relative de l'organe de liaison (2, 102, 202) par rapport à au moins un organe de transmission (233, 234) peut être déterminée lors d'un arrêt de la transmission.

5. Transmission réglable en continu selon une des revendications 1 à 4, **caractérisée en ce que** le signal de position mécanique est relié à des moyens de détection de données et/ou de traitement de données.

6. Transmission réglable en continu selon une des revendications 1 à 5, **caractérisée en ce que** un signal de position translatif est converti en un signal de position rotatif en tant que signal de position mécanique.

7. Transmission réglable en continu selon une des revendications 1 à 6, **caractérisée en ce que** le dispositif de guidage (1) est positionné autour d'un axe de rotation (11 ; 105 ; 211) par un dispositif de palier rotatif (15 ; 115), dans laquelle le dispositif de palier rotatif (15 ; 115) présente une barre de positionnement (14 ; 114), qui génère un signal de position rotatif en tant que signal de position mécanique.
